(19) Europäisches Patentamt
European Patent Office
Office européen des brevets

(11) **EP 4 699 771 A1**

(12) **EUROPEAN PATENT APPLICATION**

(43) Date of publication:
25.02.2026 Bulletin 2026/09

(21) Application number: 24196033.5

(22) Date of filing: 22.08.2024

(51) International Patent Classification (IPC):
B29B 7/00 (2006.01)     B29B 7/42 (2006.01)
B29B 7/44 (2006.01)     B29B 7/90 (2006.01)
B29B 17/04 (2006.01)     B29C 43/00 (2006.01)
B29C 48/00 (2019.01)     B29C 48/285 (2019.01)
B29C 48/395 (2019.01)     B29C 48/605 (2019.01)

(52) Cooperative Patent Classification (CPC):
B29B 7/007; B29B 7/42; B29B 7/44; B29B 7/90;
B29B 17/0026; B29B 17/0412; B29C 48/0011;
B29C 48/022; B29C 48/287; B29C 48/288;
B29C 48/397; B29C 48/605; B29B 2017/042;
B29C 43/02; B29K 2105/26;     (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Explast d.o.o.
1261 Ljubljana-Dobrunje (SI)

(72) Inventors:
• Oset, Nejc
1260 Ljubljana (SI)
• Hawlina, Max
1290 Grosuplje (SI)

(74) Representative: Patentni Biro AF d.o.o.
Kotnikova ulica 32
1000 Ljubljana (SI)

(54) **A DEVICE AND A METHOD FOR PROCESSING MIXED WASTE PLASTIC AND PRODUCTS MADE FROM MIXED WASTE PLASTIC**

(57)     The invention belongs to the field of recycling plastic waste, particularly mixed plastic, recycling of which is very challenging. The invention relates to a device and a method for processing mixed waste plastic (MWP) and products made from mixed waste plastic. The mixed waste plastic comprises at least two of the following plastics: acrylonitrile butadiene styrene (ABS), ABS and glass fibre composite (ABS GF), polycarbonate (PC), polycarbonate and glass fibre composite (PC GF), PC-ABS composite, polyamide (PA), polybutylene terephthalate (PBT), and quartz sand (QS) with granulation up to 3 mm mixed in a selected ratio, which is from 30% : 70% to 60% : 40%. The method comprises the following steps:
a) mixing MWP and QS,
b) leading the prepared mixture to the extruder comprising a shaft with blades arranged for mixing and moving the material along the extruder, wherein the extruder is heated to a temperature between 200 and 250 °C,
c) extruding the material from the extruder to a heated container, heated so that the temperature of the material inside it is between 210 and 240 °C,
d) leading the material into a mould inside a press ar- ranged to compress the mould, which presses the material into the desired shape, wherein said mould is cooled so that the product is cooled to a temperature between 60 and 90 °C and hardens.

Figure 2

(52) Cooperative Patent Classification (CPC): (Cont.)
     B29K 2509/00

## Description

## Field of the invention

The present invention belongs to the field of recycling plastic waste, particularly mixed plastic, recycling of which is very challenging. The invention relates to a device and a method for processing mixed waste plastic and products made from mixed waste plastic using said device and/or method.

## Background of the invention and the technical problem

Plastic materials and products made thereof are commonly used, hence, it is not surprising that a lot of plastic is essentially waste. Waste plastic may be recycled to some extent into new products, wood glue, concrete products, and the like. Some types of plastic, however, remain waste, as they are a mixture of materials that cannot be reused. These types of plastic remain at recycling plants as waste, as it cannot be separated for economic or technical reasons. Since such plastic is a significant waste, the technical problem is how to process this waste mixed plastic and make new products, so that the amount of mixed waste plastic will be reduced or even minimized.

## Prior art

Master thesis entitled »Uporaba odpadne plastike v betonskih kompozitih« (available at: https://repozitorij.uni-lj.sil/IzpisGradiva.php?lang=eng&id=86476) discloses use of waste plastic of the type PE, PP and PVC in concrete, which differs from the present invention.

Document CN113955990A relates to the field of concrete, in particular to semi-flexible concretes and methods for their preparation. Semi-flexible concrete is prepared from 70 to 80% (w/w) of asphalt mixture and 20 to 30% of cement mass; wherein the latter is made from the following raw materials in mass proportions: 40 to 70 parts of water, 110 to 140 parts of cement, 100 to 130 parts of sand, 60 to 80 parts of fly ash, 80 to 120 parts of hydrogenated particles of butadiene-acrylonitrile rubber, 0.3 up to 0.7 parts polyvinyl alcohol, 30 to 50 parts modified fibers, 2 to 5 parts water reducing agent, 8 to 11 parts silane coupling agent, and 6 to 9 parts expanding agent. This solution is different from the present invention.

Document CZ200789 describes a process of manufacturing of roofing from sand and plastic, which comprises mixing of crushed material of polyethylene and/or polyamide packages with grain size up to 10 mm with quartz sand with grain size up to 1 mm along with pigments and UV radiation preventing stabilizing agent. Subsequently all moisture is evacuated under vacuum and at a temperature ranging from 120 to 180 °C. The dried mixture is then extruded at a temperature ranging from 240 to 300 °C into a mold. The temperature of the mold is maintained within the range of 80 to 100 °C. The mixture contained in the mold is then pressed at a pressure of 24 to 30 MPa. There is also disclosed an apparatus for making the above-described process, the apparatus comprising a hopper interconnected with a drier provided with heating, a mixing device and steam vacuum circuit. It further includes an extruder having its outlet directed to a compression mold attached to a hydraulic press, and a clamping fixture. This document is the most similar to the present invention, but uses significantly higher temperatures, at which some types of plastic present in the invention burn, which means that this process is not suitable.

Patent application KR100648710 discloses a mixture of plastic concrete comprising low density polyethylene in the amount of 20 to 30 weight percent, polyamide in the amount of 10 to 20 weight percent, polystyrene in the amount of 15 to 25 weight percent, ashes in the amount of 10 to 20 weight percent and sand in the amount of 5 to 45 weight percent. The mixture is first molten at a temperature from 300 to 400 °C, and then second melting at temperature 200 to 300 °C is performed, followed by extrusion into a mould. The products from the plastic concrete can be a bench, s step, a pavement plate, an open channel, a boundary stone and similar. The described mixture differs from the present invention.

Patent application EP2933289A1 relates to a mixture of mixed plastic waste obtained by recycling non-identified, unclassified, and non-purified plastic, which in the preferred embodiment comprises polyethylene, approximately 50 to 60 % of the entire volume, polypropylene, approximately 20 to 30 % of the entire volume, polystyrene, approximately 5 to 10 % of the entire volume, a mixture of the waste plastic representing approximately from 1 to 10 % of the entire volume. The mixture of the waste plastic comprises polyamides, polyethylene terephthalate, polyacetal and polycarbonate.

## Description of the solution to the technical problem

The present invention solves the problems of known solutions, as defined in the independent claim, wherein the preferred embodiments are defined in the independent claims. None of the solutions known to the applicant is similar to the present invention.

The essence of the invention is in that mixed waste plastic, which represents waste to recycling plants, and quartz sand with a granulation of up to 3 mm, preferably up to 1 mm, are mixed. Said granulation is desirable for ensuring the mechanical properties of the products from said mixture, as well as for aesthetic reasons. Mixed waste plastic and sand can be mixed in a ratio of sand : mixed waste plastic 30% : 70% to 60% : 40%. All % are mass fractions of the components in the combination. The most optimal ratio is sand : mixed waste plastic 45%: 55%.

Optionally, other suitable component(s), such as dyes, can be added to the mixture of waste plastic and sand. Preferably, at least one pigment is added to the mixture, while the other components used in the previously known solutions are not required. In a possible embodiment, an oxide dye powder is used, and its amount is between 1 and 4% (w/w), based on the total weight of the mixture of quartz sand and mixed waste plastic.

Mixed waste plastic, which can be used in the invention, comprises at least two of the following plastic types: acrylonitrile butadiene styrene (ABS), ABS and glass fibre composite (ABS GF), polycarbonate (PC), polycarbonate and glass fibre composite (PC GF), PC-ABS composite, polyamide (PA), polybutylene terephthalate (PBT). Three or more of the listed different plastics can also be present in the mixture. It is also possible that some other plastic, such as polyethylene (PE), is present in the mixture, especially due to the inefficiency of the separation procedures. Usually, up to a maximum of 2% (w/w) of such components may be present. The only plastic that is not present in the mixture is polyvinyl chloride (PVC) because heating PVC releases harmful chlorine into the air, which is dangerous if inhaled.

The method for processing mixed waste plastic comprises the following steps:

a) mixing mixed waste plastic and quartz sand in the selected ratio, which is in the range of ratios quartz sand : mixed waste plastic 30 % : 70 % to 60 % : 40 %, preferably 45% : 55%, wherein both components are preferably mixed in an inlet funnel or in inlet of the extruder or even earlier,

b) leading the mixture prepared in the previous step into the extruder, preferably into the inlet of the extruder to the pipe of the extruder, which comprises a shaft provided with blades arranged to allow constant mixing and movement of the material along the entire length of the extruder from the inlet to the outlet, wherein the pipe of the extruder is heated to a temperature between 200 and 250 °C to allow the plastic to melt and bind with the sand, to obtain a mixed material, wherein the temperatures are selected in the given range to prevent some plastics in the mixed waste plastic from burning, as the temperature is not as high as in some known solutions, wherein the temperatures are from 260 to 300 °C,

c) extrusion of the material from the extruder to a heated container, wherein the mixture is held at a temperature preventing the material from hardening, so that it can be led into a mould for shaping a product at any time, wherein said heated container is heated to a temperature sufficient to keep the material inside the heated container at a temperature from 210 to 240 °C, preferably 225 °C,

d) leading the material into the mould for shaping the product, wherein the mould is provided in a press, which compresses the material into the desired shape, wherein said mould is cooled, preferably with water having temperature around 30 °C, so that the product is cooled to a temperature from 60 and 90 °C and becomes hard.

In case an additional component, such as a pigment, is used, it is added in step a) in a suitable amount. Then, the mixture and the material is treated as described above. All materials for the preparation of the mixture are provided from suitable receptacles, which has pipes or other usual transport elements connected to the extruder or its inlet.

Optionally, the individual materials or the mixture of materials are dried before the first step. Preferably, the process of removing moisture in plastic material is achieved by blowing dry heated air at temperature of 82 °C and dries for 1 to 2 hours, wherein similar is used for sand or any other components, such as pigments. Of course, other drying methods may be used.

The heated container in step c) may be any container or a pipe, where the material can be kept at the desired temperature. In the preferred embodiment the heated container is a pipe, which is on its circumference provided with heaters and insulation to prevent heat loss. In a further preferred embodiment, the heated container is placed on a scale to allow weighing of the material, which is then transferred to the mould for each product. The heated container is provided with doors or an outlet, through which the material is led to the mould.

Pressing into the product in step d) usually takes a few minutes, and the pressures used for this step are the pressures used in usual presses, such as, for example, in the above-mentioned document CZ200789. In a preferred embodiment, compression is performed by first compressing the material for 1 to 2 minutes, then opening the mould to release excess smoke from the product, and then compressing the material into the product again until it cools to the desired temperature, which typically lasts for additional 1 to 2 minutes.

The so prepared product may have different shapes, dimensions and intended uses, preferably the product is shaped as a plate, a pavement plate of various dimensions, a fence panel, a façade plate, load-bearing or non-load-bearing plate for the construction of buildings, bricks, roof tiles, and similar.

The device according to the invention comprises at least the following components:

- an extruder comprising:

 ○ an inlet of the extruder, said inlet being arranged for receiving quartz sand, mixed waste plastic and optionally additional component(s),
 ○ a pipe of the extruder, which is on one end connected to the inlet and on the second end the pipe is provided with an outlet, wherein the pipe comprises a shaft with blades for mixing and pushing the material towards the outlet, which is in important feature, as the currently known screw-based solution do not work, as the screw would be damaged due to the quartz sand,

- a heated container to which the outlet of the extruder leads, said heated container is heated to a temperature sufficient to keep the material inside the heated container at a temperature from 210 to 240 °C, preferably 225 °C,
- a mould of suitable dimensions and shape with regards to the desired product, wherein the mould is arranged to receive at least a part of the material exiting the extruder and the heated container,
- a cooling system arranged to cool the mould during formation of the product.

The device according to a possible embodiment comprises the following components:

- a first container for storing quartz sand,
- a first drier to dry the quartz sand, wherein the first drier is connected to the first container for storing quartz sand,
- a second container for storing waste mixed plastic,
- plastic crusher located downstream of the second container,
- a second drier to dry the waste mixed plastic, which is located downstream of the crusher,
- optionally at least one third container for additional components, such as a pigment, provided with a dosing mechanism,
- optionally a gutter connecting the extruder and the outlets of said containers,
- the extruder comprising:

  ○ an inlet of the extruder, said inlet being arranged for receiving quartz sand, mixed waste plastic and optionally additional component(s),
  ○ a pipe of the extruder, which is on one end connected to the inlet and on the second end the pipe is provided with an outlet, wherein the pipe comprises a shaft with blades for mixing and pushing the material towards the outlet,

- the heated container to which the outlet of the extruder leads, said heated container is heated to a temperature sufficient to keep the material inside the heated container at a temperature from 210 to 240 °C, preferably 225 °C,
- a scale installed below the heated container for weighing the material in the heated container,
- the mould of suitable dimensions and shape with regards to the desired product, wherein the mould is arranged to receive at least a part of the material exiting the extruder,
- the cooling system arranged to cool the mould during formation of the product.

Preferably, the extruder pipe is divided into two parts, namely: 1. An outer pipe, which is heated with electric heaters arranged on the circumference and covered with insulation, 2. Inner shaft with blades, which is rotated and allows mixing and movement of the mass along the extruder. It is important that the thickness of the ring is between 2 and 5 cm, depending on the diameter of the extruder. This could also be written as: $\emptyset_{\text{inner hole of the extruder}} - \emptyset_{\text{shaft}} = 3 \text{ do } 5 \text{ cm}$

Formula for calculating the inner diameter of the shaft is the following:

$$\emptyset_{\text{shaft}} = \emptyset_{\text{pipe}} * x$$

wherein x is between 0.7 and 0.85.

The diameter of the shaft may vary from the above calculation for +/- 1 to 20%.

In a preferred embodiment a gutter is provided under all mentioned hoppers, which is installed at an angle and leads to the hopper of the extruder. Feeds from all three material containers are connected to said gutter. When the operator presses a button, the doors of all three containers open at once and the material begins to fall into the gutter, where materials are mixed. Additional mixing is also performed in the extruder.

The invention will be described in further detail based on exemplary embodiments and figures, which show:

Figure 1    Schematic representation of the method according to a possible embodiment

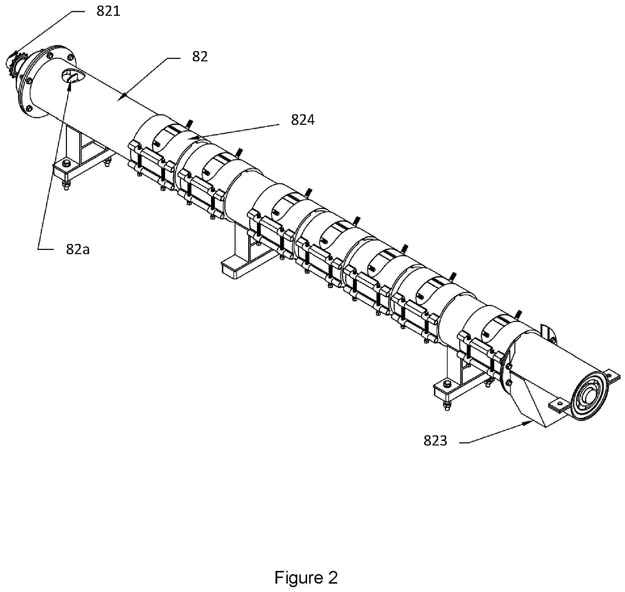

Figure 2    The pipe of the extruder according to a possible embodiment
Figure 3    The inner shaft with blades
Figure 4    The blade for the inner shaft of the extruder pipe

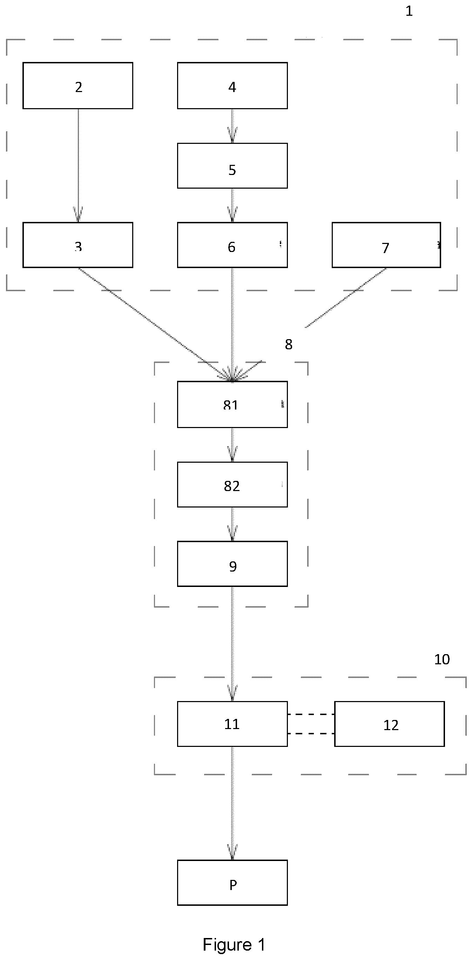

Figure 1 shows a schematic representation of the method and the device according to a possible embodiment, wherein the method is divided into several different, separated steps, namely:

i. preparation of a dry mixture
ii. extrusion
iii. shaping into a product, and
iv. optionally packaging P.

In accordance with these general steps, the device for performing the method is divided into several units, namely:

- a system 1 for preparation of dry mixture, comprising:

  ○ a first container 2 for storing quartz sand,
  ○ a first drier 3 arranged to dry the quartz sand, wherein the first drier is connected to the first container for storing quartz sand,

∘ a second container 4 for storing waste mixed plastic,

∘ plastic crusher 5 located downstream from the second container,

∘ a second drier 6 arranged to dry the waste mixed plastic, which is located downstream from the crusher,

∘ one third container 7 for additional components, such as a pigment, provided with a dosing mechanism,

∘ a gutter (not shown) connecting the extruder and the outlets of said containers, driers or crusher 2, 3, 4, 5, 6, 7, and which is arranged to lead the dry mixture of materials to the extruder, usually by providing the gutter at an angle to allow movement of the mixture due to gravitation,

- an extruder 8, which comprises:

∘ an inlet 81 of the extruder arranged to receive the material from the gutter,

∘ a pipe 82 of the extruder located downstream of the inlet 81 or beneath it, said pipe comprising a shaft 821 with blades 822, which ensure constant mixing and movement of the material along the entire length of the pipe 82 of the extruder 8 from the inlet 81 to the outlet 83, wherein the pipe 82 is heated with heaters 824 installed on the outer surface of the pipe 82 to temperatures between 200 and 250 °C to allow the plastic to melt and bind with the sand to obtain a mixed material,

∘ a heated container 9 for keeping the mixed material coming from the extruder 8 heated to a temperature sufficient to keep the material inside the heated container at a temperature from 210 to 240 °C, preferably 225 °C,

∘ a scale (not shown) installed below the heated container 9 for weighing the material in the heated container 9,

- a press 10 for shaping the product, said press comprising:

∘ a mould 11 of suitable dimensions and shape with regards to the desired product, wherein the mould 11 is arranged to receive at least a part of the material exiting the extruder 8 and the heated container 9, and for being pressed with the press 10,

∘ a cooling system 12 arranged to cool the mould 11 during formation of the product, preferably with water with temperature of around 30 °C, so that the product is cooled to a temperature between 60 and 90 °C and hardens.

Each of said containers 2, 4, 7 may be provided with doors or a similar element, which can be controlled, so that the basic materials can be led to the inlet in suitable amounts or ratios. The mass ratios of the mixed waste plastic and quartz sand are in the range sand : waste plastic 30 % : 70 % to 60 % : 40 %, preferably 45% : 55%.

In the preferred embodiment the material in the mould 11 is compressed with the press 10, wherein the material is first compressed for 1 to 2 minutes, then the mould is opened to release the excess smoke and then the material is compressed into the product, until it is cooled to the desired temperature, which is usually lasting for 1 to 2 minutes.

The pipe 82 of the extruder 8 according to a possible embodiment comprises:

- the outer pipe 82 of the extruder, which is essentially a long hollow cylinder having an inlet end and an outlet end 83, wherein the inlet end is provided with an opening 82a for leading the material into the pipe 82,

- an inner shaft 821 of the extruder, which is installed in the interior of the outer pipe 82 of the extruder so that there is space between both the shaft 821 and the pipe 82, wherein the inner shaft 821 is provided with a plurality of blades 822 arranged at different distances and in different arrangements,

- a plurality of heaters 824 arranged on the surface of the outer pipe 82 of the extruder, which are arranged to heat the pipe 82 of the extruder 9 to temperatures between 200 and 250 °C,

- an outlet 83 of the pipe 82, where the material leaves the extruder 8 and enters the heated container 9.

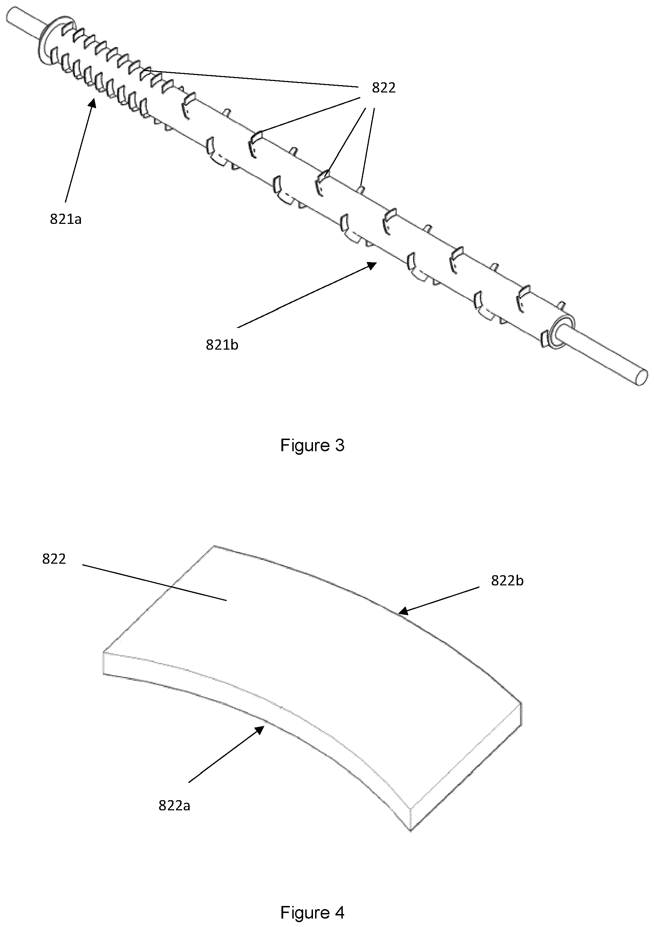

A possible arrangement of the blades 822 on the inner shaft 821 is shown in figure 3, wherein the shaft is essentially divided into two parts 821a, 821b, wherein in the first part the blades are arranged more closely together and evenly distributed, while in the second part the blades are still evenly distributed but with greater spacing.

Figure 4 shows a preferred embodiment of the blade 822 of the extruder shaft, wherein the blade is designed as a curved element having an inner edge 822a conforming to the contour of the shaft 821, and a curved outer edge 822b. The radius of curvature of the inner edge 822a is about 45 and the radius of curvature of the outer edge 822b is about 62.5, which may vary depending on the shape and dimension of the shaft 821 on which the blades 822 are mounted. The 822 blade is about 3 mm thick and about 38 mm long.

**Claims**

1. A method for processing mixed waste plastic, **characterized in that** mixed waste plastic that cannot be recycled, wherein said mixed waste plastic comprises at least two of the following plastics: acrylonitrile butadiene styrene (ABS), ABS and glass fibre composite (ABS GF), polycarbonate (PC), polycarbonate and glass fibre composite (PC GF), PC-ABS composite, polyamide (PA), polybutylene terephthalate (PBT), is mixed with quartz sand with granulation up to 3 mm.

2. The method according to claim 1, wherein the mixed waste plastic and quartz sand are mixed in a mass ratio quartz sand : mixed waste plastic from 30% : 70% to 60% : 40%.

3. The method according to claim 2, wherein the mass ratio quartz sand : mixed waste plastic is 45% : 55%.

4. The method according to any of the preceding claims, said method comprising the following steps:

   a) mixing mixed waste plastic and quartz sand in the selected ratio,
   b) leading the mixture prepared in the previous step into an extruder (8), wherein said extruder (8) comprises a shaft (821) provided with blades (822) arranged to allow constant mixing and movement of the material along the entire length of the extruder (8) from an inlet (81) to an outlet (83), wherein a pipe (82) of the extruder is heated to a temperature between 200 and 250 °C to allow the plastic to melt and bind with the sand, to obtain a mixed material,
   c) extrusion of the material from the extruder (8) to a heated container (9), wherein the mixture is held at a temperature preventing the material from hardening, so that it can be led into a mould (11) for shaping a product at any time, wherein said heated container (9) is heated to a temperature sufficient to keep the material inside the heated container (9) at a temperature from 210 to 240 °C, preferably 225 °C,
   d) leading the material into the mould (11) for shaping the product, wherein the mould (11) is provided in a press (10), which compresses the material into the desired shape, wherein said mould is cooled, preferably with water having temperature around 30 °C, so that the product is cooled to a temperature from 60 and 90 °C and becomes hard.

5. The method according to the preceding claim, wherein before mixing mixed waste plastic and quartz sand drying of both components is performed.

6. The method according to claim 4 or 5, wherein compression into a product in step d) lasts few minutes.

7. The method according to claim 6, wherein in step d) the material is first compressed for 1 to 2 minutes, then the mould (10) is opened to allow release of excess smoke, and then further compressed into the product, until it is cooled to the desired temperature, which usually lasts for additional 1 to 2 minutes.

8. The method according to any of the preceding claims, wherein at least one additional component is added to the mixture of mixed waste plastic and quartz sand.

9. The method according to claim 4, wherein the additional component is an oxide pigment in powder form, wherein the amount of said pigment is from 1 to 4% (w/w).

10. A device for processing mixed waste plastic using the method according to any of the preceding claims, wherein the device comprises at least the following components:

    - an extruder (8) comprising:

      ◦ an inlet (81) of the extruder (8) arranged to receive quartz sand, mixed waste plastic and optionally additional components,
      ◦ a pipe (82) of the extruder (8) which is on one end connected to the inlet (81), while a second end is provided with an outlet (83), wherein said pipe (82) comprises a shaft (821) with blades (822) for mixing and pushing the material towards the outlet (83),

    - a heated container (9) for keeping the mixed material coming from the extruder (8) through the outlet (83), wherein the heated container (9) is heated to a temperature sufficient to keep the material inside the heated container at a temperature from 210 to 240 °C, preferably 225 °C,
    - a press (10) for shaping the product, said press comprising:

      ◦ a mould (11) of suitable dimensions and shape with regards to the desired product, wherein the mould (11) is arranged to receive at least a part of the material exiting the extruder (8) and the heated container (9), and for being pressed with the press (10),
      ◦ a cooling system (12) arranged to cool the mould (11) during formation of the product, so that the product is cooled to a temperature between 60 and 90 °C and hardens.

11. The device according to the preceding claim, wherein said device additionally comprises the following components:

- a system (1) for preparation of a dry mixture, said system comprising:

    ◦ a first container (2) for storing quartz sand,
    ◦ a first drier (3) arranged to dry the quartz sand, wherein the first drier is connected to the first container for storing quartz sand,
    ◦ a second container (4) for storing waste mixed plastic,
    ◦ plastic crusher (5) located downstream from the second container,
    ◦ a second drier (6) arranged to dry the waste mixed plastic, which is located downstream from the crusher,
    ◦ one third container (7) for additional components, such as a pigment, provided with a dosing mechanism,
    ◦ a gutter connecting the extruder and the outlets of said containers, driers or crusher (2, 3, 4, 5, 6, 7), and which is arranged to lead the dry mixture of materials to the extruder (8), usually by providing the gutter at an angle to allow movement of the mixture due to gravitation.

12. The device according to any claim from 10 to 11, wherein the pipe (82) of the extruder (8) comprises:

    - the pipe (82) of the extruder (8) shaped as a long hollow cylinder provided with an inlet end and an outlet end, wherein the inlet end is provided with an opening (82a) for leading the material into the pipe,
    - an inner shaft (821) of the extruder (8) inserted in the interior of the pipe (82) so that between both a space is left, wherein the inner shaft (821) is provided with the plurality of blades (822) arranged at different distances and in different arrangements,
    - a plurality of heaters (824) arranged on the surface of the outer pipe (82) of the extruder (8), which are arranged to heat the pipe (82) of the extruder (8) to a temperature between 200 and 250 °C,
    - an outlet (823) from the pipe (82), wherein it is arranged to lead the material from the extruder (8) to the heated container (9).

13. The device according to claim 12, wherein the thickness of the ring between the outer pipe (82) and the inner shaft (821) of the extruder (8) is defined with a formula $\varnothing_{shaft} = \varnothing_{pipe} {}^{*}x$, wherein x is between 0.7 and 0.85, wherein the preferred thickness of the ring is between 2 and 5 cm.

14. A product made from a combination of non-recyclable mixed waste plastic and quartz sand with granulation up to 3 mm, wherein the mixed waste plastic and the quartz sand are mixed in mass ratios quartz sand : waste plastic 30 % : 70 % to 60 % : 40%.

15. The product according to the preceding claim, selected in the group comprising a plate, a pavement plate of various dimensions, a fence panel, a façade plate, load-bearing or non-load-bearing plate for the construction of buildings, bricks, roof tiles, and similar.

Figure 1

Figure 2

822

821a

821b

Figure 3

822

822b

822a

Figure 4

Europäisches
Patentamt

European
Patent Office

Office européen
des brevets

# EUROPEAN SEARCH REPORT

**Application Number**

EP 24 19 6033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 598 356 B1 (HAN DEOK HWAN [KR]) 29 February 2016 (2016-02-29) | 10-12 | INV.<br>B29B7/00 |
| Y | * abstract * | 1,4-9 | B29B7/42 |
| A | * paragraphs [0001], [0012], [0023], [0024] *<br>* figure 1 * | 2,3,13 | B29B7/44<br>B29B7/90<br>B29B17/04<br>B29C43/00 |
| X | US 11 970 586 B1 (KOCAK SALIH [US] ET AL) 30 April 2024 (2024-04-30)<br>* abstract *<br>* column 4, lines 49-67 *<br>* column 5, lines 30-38 *<br>* column 6, lines 4-11 *<br>* column 6, line 64 - column 7, line 14 *<br>* column 16, lines 43-44 *<br>* claim 13 *<br>* figure 10 * | 14,15 | B29C48/00<br>B29C48/285<br>B29C48/395<br>B29C48/605 |
| A | RU 66 271 U1 (N.N.) 10 September 2007 (2007-09-10)<br>* abstract *<br>* figure 1 * | 1-15 | |
| | | | **TECHNICAL FIELDS SEARCHED (IPC)** |
| Y | PL 222 468 B1 (MARKS MARCIN [PL]) 29 July 2016 (2016-07-29)<br>* translation of the description * | 1,4-9 | B29B<br>B29C<br>B29K |

The present search report has been drawn up for all claims

| Place of search | Date of completion of the search | Examiner |
|---|---|---|
| Munich | 3 February 2025 | Koning, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6033

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2025

| Patent document cited in search report | | Publication date | Patent family member(s) | Publication date |
|---|---|---|---|---|
| KR 101598356 | B1 | 29-02-2016 | NONE | |
| US 11970586 | B1 | 30-04-2024 | NONE | |
| RU 66271 | U1 | 10-09-2007 | NONE | |
| PL 222468 | B1 | 29-07-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113955990 A
- CZ 200789
- KR 100648710
- EP 2933289 A1